Europäisches Patentamt

European Patent Office

Office européen des brevets

(19)

(11) **EP 1 645 865 A1**

(12) **EUROPEAN PATENT APPLICATION**
published in accordance with Art. 158(3) EPC

(43) Date of publication:
**12.04.2006 Bulletin 2006/15**

(51) Int Cl.:
*G01N 21/45* (1980.01)     *G01N 33/543* (1985.01)

(21) Application number: **04729031.7**

(22) Date of filing: **23.04.2004**

(86) International application number:
**PCT/CN2004/000390**

(87) International publication number:
**WO 2004/102170 (25.11.2004 Gazette 2004/48)**

(84) Designated Contracting States:
**AT BE BG CH CY CZ DE DK EE ES FI FR GB GR HU IE IT LI LU MC NL PL PT RO SE SI SK TR**

(30) Priority: **25.04.2003 CN 32108803**

(71) Applicants:
• **Tan, Yushan**
  **Xi'an City,**
  **Shanxi 710049 (CN)**
• **Tan, Hong**
  **San Jose, CA 95129 (US)**
• **Chen, Duanjun**
  **San Jose, CA 95129 (US)**

(72) Inventors:
• **Tan, Yushan**
  **Xi'an City,**
  **Shanxi 710049 (CN)**
• **Tan, Hong**
  **San Jose, CA 95129 (US)**
• **Chen, Duanjun**
  **San Jose, CA 95129 (US)**

(74) Representative: **McLeish, Nicholas Alistair Maxwell**
  **Boult Wade Tennant**
  **Verulam Gardens**
  **70 Gray's Inn Road**
  **London WC1X 8BT (GB)**

(54) **OPTICAL FIBER ARRAY BIOCHIP BASED ON WHITE-LIGHT REFLECTROMETRIC INTERFERENCE SPECTROSCOPY**

(57)     The invention discloses a kind of optical fiber micro-fluidic biochip that is used to detect the existence and/or density change of certain biological or chemical materials. This bio-chip employs optical fibers as sensors. One or multiple layers of materials are immobilized at one end surface of the fiber, where the immobilized materials are of different properties both from the fiber and from the materials to be detected. At least one of the immobilized layers is made of such a material that is complementary to the biological or chemical material to be detected. When molecules of the biological or chemical material bind onto the complementary material layer, spectral interference distribution patterns of light beams reflected from the fiber-tip layers are shifted. This kind of spectrum shift is then used to, quantitatively or qualitatively, analyze the density, binding speed, as well as geometry of the sample molecules. By adding many fibers into a linear array or a two-dimensional array and using an N:1 optical fiber coupler, a device can be built that is capable of detecting multiple properties of a single sample (analyte) or multiple properties of multiple samples (analytes).

FIG. 7b

EP 1 645 865 A1

**Description**

1. Field of the Invention

This invention involves an opto-electronic bio-detection device. Specifically, this invention involves the detection of the presence of a particular biologic or chemical material, or property changes of the material (analyte). The device includes an optical fiber micro-fluidic bio-chip array that utilizes the phase shift information in the reflected white light spectral interference patterns.

2. Background

Detecting whether or not a particular biologic material is present in a sample is often carried out for research and medical diagnostic purposes. For example, blood serum is often tested for the presence of a particular antibody. An antigen is a substance which specifically reacts with its complementary antibody and is therefore used, for example, to test blood serum for the presence or absence of its complementary antibody. The presence or absence of the antibody can be detected, for example, by methods of immuno-diffusion, immuno-electrophoresis, and immuno-fluorescence, each of which is briefly described below.

Immuno-diffusion is a serological procedure in which antigen and antibody solutions are permitted to diffuse, through a gel matrix, towards each other. An interaction between the antigens and their complementary antibodies is manifested by a precipitin line in each solution. Immuno-electrophoresis is a serological procedure in which components of an antigen are separated by electrophoretic migration and then made visible by immuno-diffusion of specific antibodies. Immuno-floresence is a procedure used to identify an immune response. A particular antigen is stained (or "labeled") with a label that fluoresces in a light of a particular wavelength, for example, ultraviolet light, thereby permitting such an antigen can be easily identified. Other types of labels include radioisotope labels and enzyme labels.

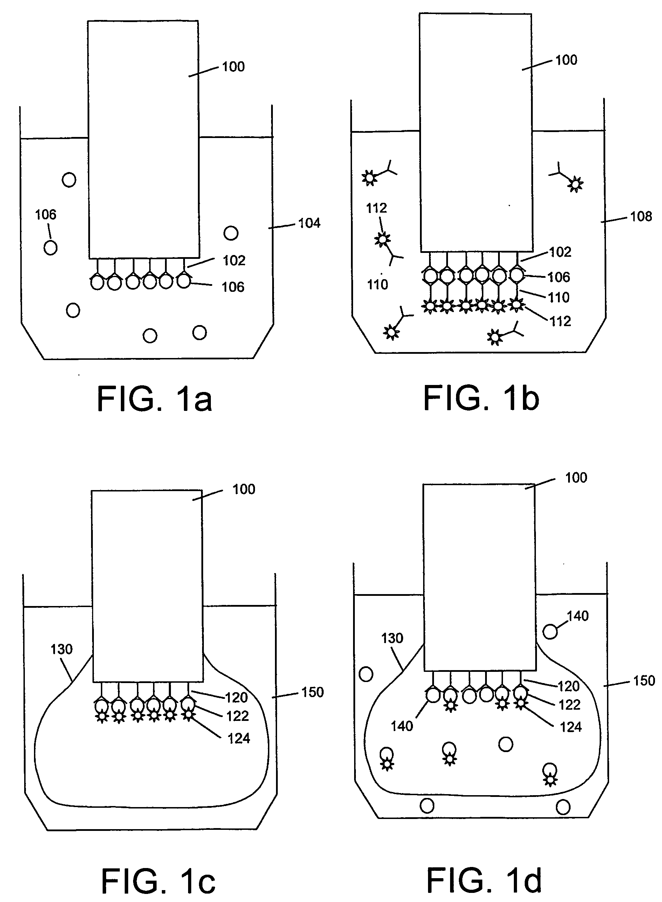

One known methodology of exploiting immuno-florescence to identify a biologic material (such as an antibody or antigen) uses fiber optic fluorescent and chemi-luminescent biosensors. Such fiber optic biosensors are reportedly the largest group of fiber optic biosensors used both commercially, and in research and development. This known methodology can use two types of fiber optic biosensors; namely, sandwich fiber optic biosensors and displacement biosensors, each using a different reaction format. The use of sandwich type fiber optic biosensors is illustrated in FIGS. 1a and 1b while the use of displacement type fiber optic biosensors is illustrated in FIGS. 1c and 1d.

As shown in FIG. 1a, a sandwich type fiber optic biosensor is formed by immersing an optical fiber 100, having a reagent 102 (such as an antigen for example) coated on its distal end, into a solution 104 to be tested for the presence of antibodies 106 complementary with the reagent 102. If antibodies 106 complementary with the reagent 102 are present in the solution 104, they will bond with the reagent 102. The optical fiber 100 is kept immersed in the solution 104 for an appropriate incubation period and then is washed, for example, by saline.

As shown in FIG. 1b, the optical fiber 100 having the reagent 102 and any bonded antibodies 106, is then immersed into a solution having the reagent 110 (such as antigens for example). A label 112, such as a fluorescent indicator for example, is attached to the reagent 110. If any antibodies 106 are bonded to the reagent 102, the reagent 110, along with the label 112, will bond with such antibodies 106. The optical fiber 100 is then illuminated with a light source (not shown) at its proximal end. Any fluorescently labeled reagent 110 bonded to the antibodies 106, which are in turn bonded to the reagent 102 at the distal end of the optical fiber 100, will become excited by the light and will return a fluorescent signal. The resulting fiber optic biosensor will have adjacent layers of the reagent 102, the antibody 106, and the reagent 110 with label 112 at its distal end; hence the term "sandwich" type biosensor. In a fiber optic sandwich type biosensor, the higher the concentration of antibodies 106 in the test sample, the more labeled reagent 110 will bond to it, and therefore, the more intense the returned fluorescent signal.

As shown in FIG. 1c, a displacement type fiber optic biosensor comprises an optical fiber 100 having a reagent 120 (such as an antigen for example) coated onto its distal end. A reagent 122 (such as an antibody, for example), conjugated with an enzyme label 124, is sealed by a membrane 130 in a dialysis package. The reagent antibody 122 is complementary with reagent antigen layer 120. Therefore, the reagent antibody 122 always has a tendency to bond to the reagent antigen layer 120 before a sample antibody is detected. This structure is immersed into a sample solution 150 to determine whether the sample 150 includes an antibody 140 which is also complementary to reagent 120. As shown in FIG. 1d, if the sample solution 150 includes the antibody, it will tend to bond to reagent layer 120 at the distal end of the optical fiber 100, competing with the fluorescent-labeled reagent 122. The optical fiber 100 is then illuminated with a light source (not shown) at its proximal end. Any labeled reagent 122 remaining bonded to reagent layer 120 will become excited by the light and will return a fluorescent signal. In this case, the higher the concentration of antibody 140 in the sample solution 150, the more labeled reagent 122 will leave the coated reagent 120 at the end of the optical fiber 100, and hence, the lower the intensity of any returned fluorescent signal. Thus, the concentration of antibody 140 is inversely proportional to the returned light intensity.

The above mentioned fiber optic biosensors have a number of disadvantages. Regarding the sandwich type fiber optic biosensor, the optical fiber 100 must first be immersed in the sample solution 104, washed, and then be immersed in a solution 108 including labeled reagent 110. Thus, this sandwich type assay is heterogeneous, and two discrete reaction steps must be performed. Consequently, only an endpoint concentration can be determined. The rate at which the antibodies 106 are bonded with the reagent 102 cannot be determined in real time. Furthermore, the sandwich type fiber optic biosensor cannot be used for most in vivo testing because of the heterogeneous assay format being used, and because most labels (e.g., a fluorescent indicator) are potentially toxic. Moreover, most labels have poor stability in storage, particularly if exposed to light. Also, the optical intensity signal utilized in these methods is susceptible to environment and system induced noises, such as light source instability, temperature changes, and fiber-bend introduced light losses.

Regarding the displacement type fiber optic biosensor, the membrane 130 adds cost and size to the biosensor. Further, the displacement type fiber optic biosensor is not well suited for in vivo testing; again, due to its size and the potential toxicity of the labels used with the reagent.

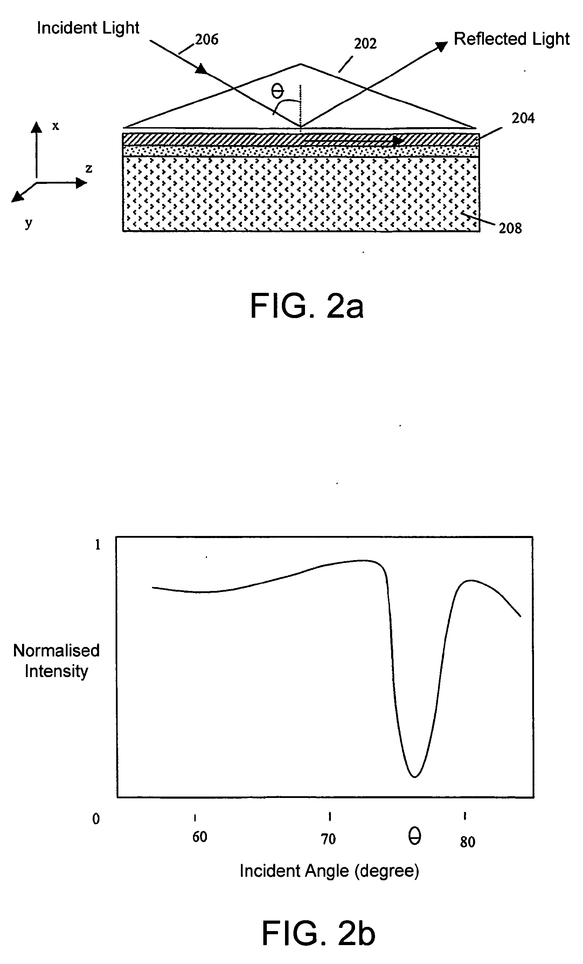

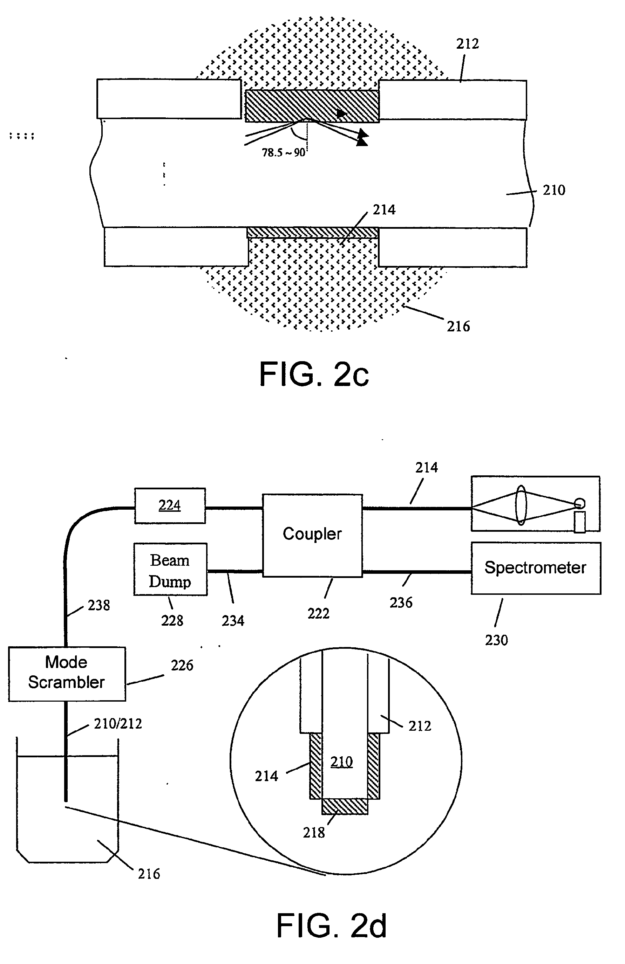

Another type of optical biosensor is known as surface plasma resonance (or "SPR") sensors. A known bulk optic SPR sensor, shown in FIG. 2a, includes a prism 202 having a very thin metal layer 204 which forms an interface with a bulk dielectric 208. An incident beam 206 of transverse magnetically polarized monochromatic light enters the prism 202 at a first face, is reflected by the metal layer 204, and exits a second face of the prism 202. The intensity of the reflected beam is later measured for various angles $\theta$ of the incident light beam 206. As shown in FIG. 2b, the intensity of the reflected beam drops at a particular angle of incidence $\theta_{sp}$, at which the energy of the incident light is coupled with surface plasma (or "SP") waves which are excited at the metal-dielectric interface. If a film is deposited on the thin metal layer 204, the effective refractive index of the bulk dielectric material changes, especially at the vicinity of the metal layer 204. This effective refractive index depends on the refractive indices of the bulk dielectric material and the deposited film, and the thicknesses and density of the deposited film. Thus, if the thickness of the deposited film changes, the effective index of refraction also changes, and therefore the critical angle of incidence $\theta_{sp}$ changes. By determining the critical angle of incidence $\theta_{sp}$, the thickness and/or density of the deposited film can be derived.

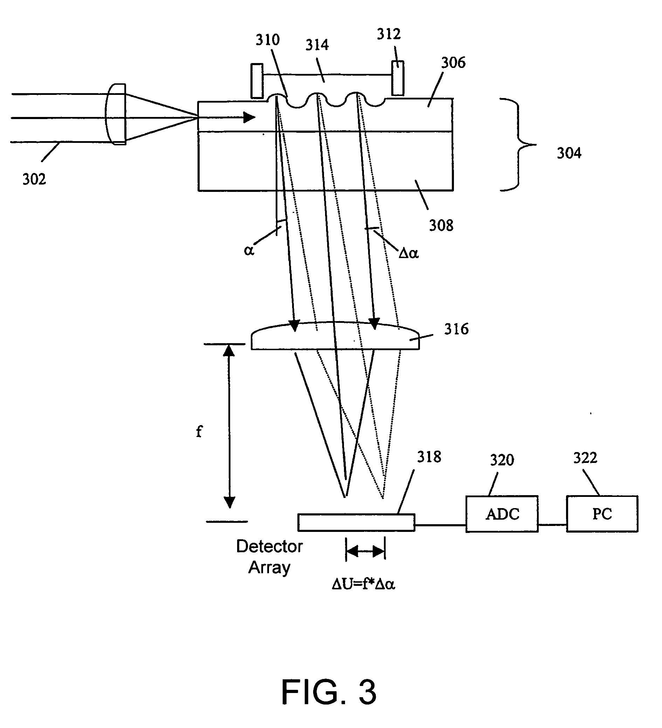

Another type of biosensor is known as grating biosensors. As shown in FIG. 3, an incident beam of laser light 302 is optically coupled with the end of a planar waveguide 304. The planar waveguide 304 includes a very thin film 306 of high refractive index on a glass substrate 308. A section of the very thin film 306 is provided with surface relief grating 310. The surface relief grating 310 couples an excited guided mode of the laser light 302 out of the planar waveguide 304 at an angle $\alpha$ to the normal of the planar waveguide 304. The angle $\alpha$ is related to the effective refractive index of the guided mode.

The surface relief grating 310 may be provided with a layer of reagent. A liquid test sample 314 may be provided in a basin 312 surrounding the surface relief grating 310. If contents of the liquid test sample 314 bond with the reagent layer, the effective refractive index will change, thereby changing the diffraction angle $\alpha$.

The out-coupled beam is focused, by lens 316, onto a one-dimensional position sensitive photo-detector (or "PSD") 318. The output of the PSD 318 is sampled by an analog-to-digital converter 320 and provided to a personal computer 322 for analysis. A change in the angle $\alpha$ of the out-coupled beam, which is caused by a change in the effective refractive index, produces an optical spot translation on the PSD 318. This spot translation is then used to calculate the thickness change of the film that includes the reagent layer and any bonded elements.

Grating biosensors have a number of drawbacks. First, after a waveguide is in contact with an aqueous sample, the effective index of refraction is only changing slowly. This is known as the "drift effect". With test samples having low concentrations of elements to be detected, the slow increase in effective indices of refraction cannot be differentiated from the drift effect with certainty. Second, the grating biosensor cannot perform remote sensing functions. Moreover, due to its relatively large size, it cannot be used for many in vivo sensing applications. This relatively large size also makes conducting multiple tests of a single sample difficult. Furthermore, the sensing section (i.e., the surface relief grating of the waveguide) is relatively long. Thus, a large quantity of sample solution is required. Finally, fabricating planar waveguides with built-in gratings involves a complex and costly process, particularly onto a micro-vessel.

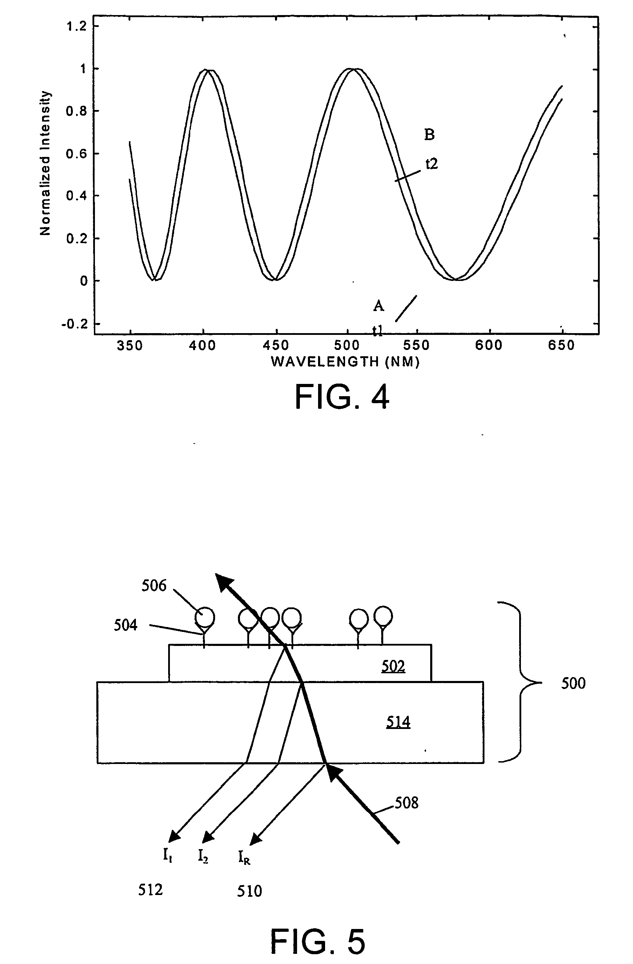

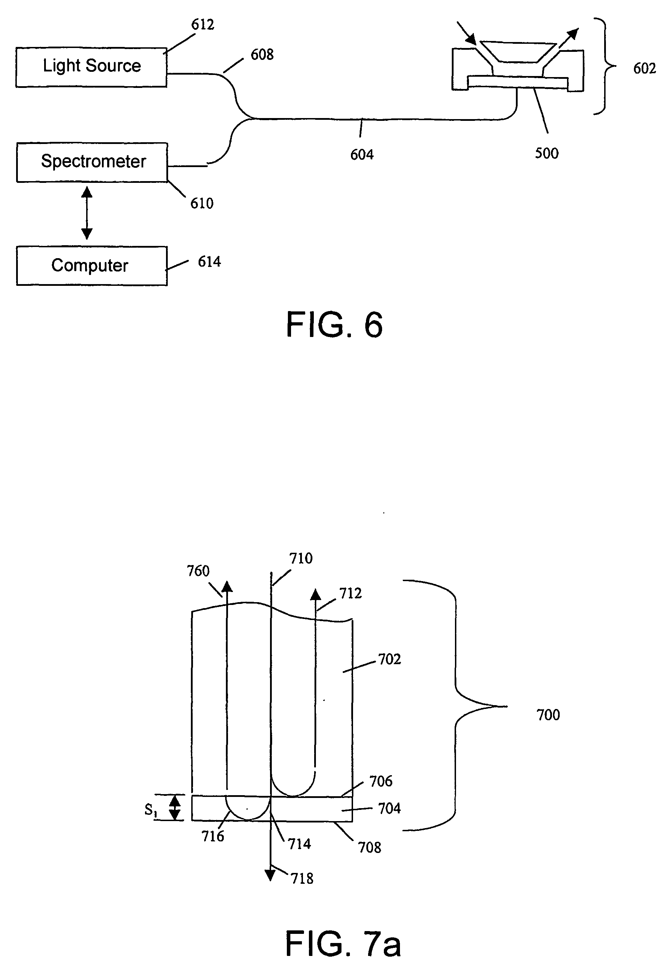

Still another type of biosensor is known as a micro-cuvette-based interferometer biosensor. As shown in FIG. 5, in the micro-cuvette-based interferometer, a glass or quartz slide forms a substrate 514 which is provided with a film 502 of polystyrene, polysilozane, or silicon dioxide. As shown in FIG. 6, the substrate 514 and film 502 are attached to the bottom of a flow cell 602 with a silicon seal. A bifurcated multi-strand quartz optical fiber 604 is optically coupled normal to the substrate 514. An end of a first branch 606 of the optical fiber 604 is coupled with a spectrometer 610 (such as a diode array photometer), while an end of a second branch 608 of the optical fiber 604 is coupled with a light source 612 (such as a xenon light source or a 20 Watt halogen light source).

Next, a solution containing a predetermined concentration of a reagent 504, such as an immunoglobin antigen, is passed through the flow cell 602 for a predetermined period of time whereby an layer of antigens 504 is provided on the film 502. Washing the structure is used to halt an increasing thickness of the antigen layer 504. Ovalbumin (i.e., egg white protein) is then used for blocking. Another washing step is then performed.

Finally, a sample solution is passed through the flow cell 602 for a predetermined period of time. If the sample solution includes antibodies 506 complementary to the antigens 504, they will bond to the structure thereby further increasing the thickness of the structure. Since the protein molecules are often smaller than the wavelength of the light supplied by the light source 612, an increase in the coverage of a monomolecular protein layer can be treated as an increase in the thickness of a homogeneous film.

The spectrometer 610 is used to determine the spectrum and intensity of the reflected light waves at different times. For example, FIG. 4 shows an output "A" of the spectrometer 610 at a first time and an output "B" of the spectrometer 610 at a subsequent time when the thickness of the film has increased. The thickness $\Delta$ of the layer can be determined based on Fresnel's law. That is, the intensity I of interfering light reflected at the interfaces of a thin film can be represented by:

$$I = I_1 + I_2 + 2 * SQRT(I_1 * I_2) * COS(2\pi\Delta/\lambda)$$

where $\Delta$ denotes the effective optical path difference between the two partial beams, and $\lambda$ denotes the wavelength of incident light, $I_1$ and $I_2$ denote the intensity of reflected partial beams from the film interfaces. Because the intensities of the two reflected light beams are approximately equal, the following relationship results:

$$I = 2 * I_R * (1 + COS(2\pi\Delta/\lambda))$$

Thus the effective optical path difference $\Delta$ can be determined from the interference pattern, and then thickness of the film can be deduced from value of $\Delta$.

Although the micro-cuvette-based interferometer biosensor discussed above is advantageous in that the reagent need not be labeled and because analysis is not limited to endpoint data, it does suffer from several drawbacks. First, the area of the micro-cuvette (i.e., the slide) is relatively large. Consequently, thick multi-strand optical fiber cable must be used rather than a thin single strand optical fiber. Also, the relatively large area of the micro-cuvette necessitates large sample volumes or high sample concentrations.

THE INVENTION

Based on shortcomings of the above described techniques, improvements for the biosensor are needed in the following aspects;

   1) Bio array chips that can simultaneously perform multiple and parallel tests;
   2) Not using unstable or toxic reagents or indicators;

   3) Capable of continuous sampling to monitor reaction procedures, and yet to provide end point results;
   4) Low in cost, small in size, and easy to use;
   5) High sensitivity and large linearity range; and/or
   6) Can prevent nonspecific bindings.

The purpose of this new patent is to provide a type of optical fiber array biochip that is based on the spectrum shifting property of the white light reflected interference fringe patterns. This biochip utilizes integrated optical fibers as the bio probes. Bio or chemical reagent layers immobilized on the front tip of the bio probe are used as the base layer for the reflectance signal. At least one layer of the bio or chemical materials is the complementary material to the analyte under test and is used to capture the analyte. When the analyte molecules bind onto the complementary layer, the distribution of the reflected white light interference pattern is changed. It is the shift of the interference fringe pattern that is used to qualitatively or quantitatively determine the concentration, reaction speed, as well as geometric dimensions of the reacting analyte molecules.

In order to achieve the above mentioned testing goal, the technical solution is to utilize the optical fiber biochip array that is based on the white light reflected interference patterns. Systems include:

   1) linear optical fiber bio-chips; 2D optical fiber array bio-chips; and hybrid biochips composed of 2D optical fibers and glass base plates;
   2) micro fluidics that are compatible with above bio-chips
   3) optical fiber array transformers.

Linear array bio chips can be based on one or more linear optical fiber modules 1000 that are enclosed in chip 1008; the linear fiber module 1000 is built on linear fiber optical array 1001 that is encapsulated in enclosure 1002;

2D array optical fiber chip can be based on a 2D fiber module 1010 that is enclosed in biochip 1019; the 2D fiber module is composed of the 2D optical fiber array 1011 encapsulated in cuvette 1012; hybrid 2D optical fiber-glass base plate bio chip can utilize the surface of the glass base plate 1022 to immobilize the bio region layer 1013, and can consist of a 2D distributed sensing array. Glass base plate 1022 and micro fluidic cuvette 1024 are physically integrated together. Optical fiber module 1025 and optical fiber transformers 1300 and 1304 are placed behind the glass base plate 1022. Optical index matching liquid 1028 is injected into the gap between module 1025 and transformer 1300 (1304). Optical fibers 1026, 1301 or 1305 of module 1025 and of transformer 1300 (1304) are positional aligned one to one with the bio or chemical layer array 1023.

There are 3 basic forms in the integration of the optical fiber bio-chips with the micro fluidic cuvettes:

1) Linear array based optical fiber bio-chips:

Optical fiber 1001 is in encapsulated in enclosure 1002 to form optical fiber module 1000. Two optical fiber modules 1000a and 1000b are laid parallel, to form a micro fluidic cuvette 1005. The two sides of micro cuvette 1005 are connected with an input port 1006 and an exit port 1007. Exit port 1007 is further connected to a micro fluidic pump.

2) 2D array based optical fiber bio chips:

Optical fiber 1011 is encapsulated into enclosure 1012 to form fiber module 1010. Optical fiber 1011 can be arranged into either linear patterns or 2D patterns. Fiber module 1010 is mosaicked perpendicularly onto bottom part of biochip 1019. A horizontal micro fluidic channel 1015 is devised in front of optical fiber tip surface 1013. The two ends of the micro fluidic channel are further connected with fluid distribution channels 1014 and 1016. An input port 1017 and exit port 1018 are built on the top of distribution channel 1014 and 1016, and exit port 1018 can be connected to a micro fluidic pump.

3) Hybrid 2D optical fiber array-glass plate biochips:

2D array distributed bio- or chemical layers 1023 is spotted on glass base plate 1022. The surface with the bio or chemical layers of the glass base plate 1022 is pressed into micro fluidic cuvette 1024. The other surface of the glass base plate 1022 is connected to optical fiber module 1025. In the middle gap between the glass base plate and the optical fiber array, it is optionally injected with optical index matching liquid.

The above mentioned three combination forms of optical fiber bio chips and micro fluidic cuvettes can be further extended to other formats, for example:

1) Biochips modules composed of multi channel fluidic cuvettes and linear array optical fibers:

Optical fibers 1101 are equally spaced in an enclosure 1102 to form the optic fiber module 1101. Multi channel micro fluidic cuvette 1103 is placed on top of the optic fiber module 1101. The two sides of the micro fluidic cuvette are connected to the input port 1105 and exit port 1106. Cover plate 1107 presses micro fluidic cuvette 1103 down to the micro chip 1100. An air cavity 1108 is constructed under cover plate 1107, where this air cavity is placed above all exit ports 1106. An air extraction tube is placed on top of the cavity 1108; and this extraction tube is connected to a micro fluidic pump.

2) Sipper type linear optical fiber bio chips:

Linear array based fiber optic module 1200 is encapsulated inside biochip 1203. The end surface 1202 of the optical fiber, which has been immobilized with bio or chemical layers, is placed toward the micro fluidic cuvette 1205. One end of the micro fluidic cuvette is connected to the fluid waste chamber 1207, and further linked to exit port 1206. Another end of the micro fluidic cuvette is connected to air extraction tube 1204. Air extraction tubes 1204 are distributed accordingly with the structure of the reagent well 1210, either linearly or two dimensionally. Cover block 1209 is pressed onto biochip 1203. Air extraction tube 1208 is mosaicked into cover block 1209, and is connected to a micro fluidic pump.

3) Sipper type planar optical fiber bio chip modules:

A 2D micro chip array can be formed by parallel combining several spiral type linear biochips 1203 with a cover block 1212. Air extraction tube 1214 is distributed accordingly with reagent cuvette 1210, either linearly or two dimensionally. Additionally, an air chamber 1213 can be placed under the cover block 1215. The air tube 1214 is placed on top of the central portion of the air chamber, and the air chamber can be connected to a micro fluidic pump.

4) Hybrid sipper type biochips composed of a linear optical fiber array and a glass base plate:

2D grid patterns of bio- or chemical layers 1023 are built on top of a glass base plate 1022. Glass plate 1022 is mosaicked into biochip 1229. Optical fiber module 1027 is placed at the back of the glass base plate 1022. In the middle between module 1027 and glass plate 1022, it is injected with optical index matching liquid 1028. The cover block 1230 is pressed onto the top of exit tube 1206. The air extraction tube 1214 is connected on top of the cover block 1230, and can be connected to a micro fluidic pump. Similar to the above sipper type optic fiber biochips, combined modules can be formed by parallel integration of several linear optical fiber-glass plate based sipper type biochips 1229. The air extraction tubes 1204 are distributed accordingly with the reagent well 1210.

5) Hybrid sipper type biochip modules composed of linear optic fiber arrays and glass base plates:

A hybrid sipper type biochip module can be formed by integrating several linear optical fiber array-glass base plate sipper type biochips 1229 into one structure. Air extraction tube 1204 is distributed accordingly with the reagent well 1210, either linearly or two dimensionally.

In the above described biochip and biochip module structures, broad brand anti reflection layers are coated on the surfaces of the optic fiber modules 1000, 1010, 1025, 1100, and 1200. The end surfaces of the fiber optic modules are further treated with an activation process (generally a silanization treatment process), and then placed into coating reagent liquids at a later time when needed.

The above described optical fiber array biochips and biochip modules utilize integrated optical fibers as the bio sensors. Bio or chemical reagent layers immobilized on the front tip of the bio probe are used as the base layer for the reflectance signal. At least one layer of the bio or chemical materials is the complementary material to the analyte under test and is used to capture the analyte. When the analyte molecules bind onto the complementary layer, the distribution of the reflected white light interference pattern is changed. By using the shifting property of the interference fringe pattern density, reaction speed, as well as geometric dimensions of the reacting analyte molecules can be determined, either qualitatively or quantitatively.

DESCRIPTION OF THE DRAWINGS

FIGS. 1a, 1b, 1c and 1d (prior art) illustrate conventional (i.e. prior art) sandwich type and displacement or competitive type fiber optic fluorescent biosensors.

FIG. 2a (prior art) illustrates cross-sectional side view of a bulk-optic surface plasma resonance sensor.

FIG. 2b (prior art) is a plot of reflection intensity versus angle of incidence in a bulk-optic surface plasma resonance sensor.

FIG. 2c (prior art) is a cross-sectional side view of a fiber optic surface plasma resonance sensor probe.

FIG. 2d (prior art) is a block schematic of a system using a fiber optic surface plasma resonance bioprobe. FIGS. 2a through 2d depict conventional (i.e. prior art) devices.

FIG. 3 (prior art) is schematic which illustrates the operation of a conventional (i.e. prior art) output grating bioprobe.

FIG. 4 (prior art) is a plot of reflected intensity versus wavelength in the conventional (i.e. prior art) micro-cuvette-based interferometer biosensor at a first time $t_1$ and at a subsequent time $t_2$.

FIG. 5 (prior art) is a cross sectional view of a slide used in the conventional (i.e. prior art) micro cuvette-based interferometer biosensor.

FIG. 6 (prior art) is a schematic which illustrates the system used for the conventional (i.e. prior art) micro-cuvette-based interferometer biosensor.

FIGS. 7a and 7b illustrate the optical principle of operation of a single bioprobe used with the system.

FIG. 8 is a schematic of a preferred embodiment of a single channel biosensor system.

FIGS. 9a and 9b illustrate a shifted spectral dispersion pattern received by a one-dimensional charge coupled device of a spectrometer used in the system.

FIG. 10a, 10b and 10c demonstrate three basic forms of optical fiber array based bio-chips.

FIG. 11 shows a biochip module composed of multi-channel micro-fluidic cuvettes and optical fiber linear arrays.

FIG. 12a, 12b, 12c and 12d delineate a biochip module composed of multi-channel micro-fluidic cuvettes and optical fiber arrays with sippers.

IMPLEMENTATION OF THE INVENTION

Before the introduction of the details of the optical fiber array based biochip, we briefly describe a signal detection system of the bioprobe that is based on the shifting property of the white light reflected spectral interference patterns. The signal detection system can include:

    a) a light source 804 for providing a light beam;

    b) a fiber optic bioprobe 700;
    c) a detector 818 (and optionally a second detector 829), that detects an interference pattern formed by the first and second reflected beams.
    d) a fiber optic coupler 802 (and optionally a second optical coupler 808), that optically couples the light source with the fiber optic probe and optically couples the fiber optic probe with the detector;
    e) a signal processor, that determines a phase associated with an interference pattern detected by the detector at a first time, determines a phase associated with an interference pattern detected by the detector at a second time, and determines the concentration of the substance based on a shift in the phases associated with the interference patterns detected by the detector at the first and second times. The processor includes a microprocessor 830, storage device 832, RAM 834;
    f) a phase tracker 822;
    g) an output device 824;
    h) a periodical signal generator 820;
    i) fiber optic connector 802 that connects the disposable bioprobe 700 with the system waveguide 814;
    j) optical waveguides 806, 828, 816, 814, 810.

The bioprobe 700 includes an optical fiber section, a proximal end surface, and a distal end surface. The proximal end surface of the fiber is coated with optical wideband anti-reflection layers, and is used to receive illumination light from the light source. The distal end surface of the optical fiber is coated with a layer of (or, multiple layers of) reagent materials. The fiber optic probe produces at least a first reflected beam and a second reflected beam from the incident light beam. The bioprobe 700 is optically coupled, via connector 802, with a waveguide 814 of the biosensor optical analyzer.

Light source 804 is a broadband light source. Light emitted by the light source is transmitted to the fiber optical bioprobe 700, via an optical waveguide 806, Y-shaped optical coupler 808, optical waveguide 810, Y-shaped optical couple 812, optical waveguide 814, and optical coupler 802

The Y-shaped optical coupler 812 also optically couples the optical waveguide 814 with another optical waveguide 816. The optical waveguide 816 is optically coupled with a spectrometer 818. The spectrometer 818 is preferably a one-dimensional CCD. The spectrometer 818 is electrically coupled with the periodic signal generator 820.

The optical coupler 808 also optically couples the optical waveguide 806 with another optical waveguide 828 (optional). The optical waveguide 828 is optically coupled with a spectrometer 829 (optional). The spectrometer 829 is preferably a one-dimensional CCD. The spectrometer 829 is electrically coupled with the periodic signal generator 820.

The optical waveguide 814 is connected to the optical fiber probe 700 via optical coupler 802. The phase tracker 822 is linked to the periodical signal generator 820, output device 824 and signal processor. The periodical signal generator 820, light source 804, output device 824, and spectrometer 818 are also connected to the signal processor.

The optical waveguides 806, 828, 816, 814, and 810 are, for instance, single mode optical fiber, such as communications grade optical fiber. Multi-mode optical fiber may also be used. The optical fiber is preferably at least 3 $\mu$m in diameter, and more preferably between 100 $\mu$m and 600 $\mu$m in diameter.

The operation of the system includes steps of (a) immersing the distal end of the fiber optic probe into the sample solution, (b) optically coupling a light source with the proximal end of the fiber optic probe, (c) detecting at least a first light beam reflected from an interface between the distal end surface of the fiber optic section and the reagent layer, and a second light beam reflected from an interface between the reagent layer and the sample solution, reflected from the distal end of the fiber optic probe, (d) detecting an interference pattern (e.g., a diffraction pattern) formed by the first and second light beams at a first time, (e) detecting an interference pattern formed by the first and second light beams at a second time, and (f) determining whether the substance is present in the sample solution based on whether a shift occurs in the interference patterns. The concentration of the substance may be determined based on a shift in the interference patterns and based on a differential between the first and second times.

During operation, each step of detecting can include sub-steps of (a) dispersing an interference beam, formed by the first and second light beams, onto a spectrometer, (b) determining a periodic function based on the spectral dispersion pattern (e.g., a diffraction pattern), and (c) determining a phase of the periodic function.

The processor includes a periodic signal generator, a phase tracker, and a computer. The periodic signal generator generates a first periodic signal based on the interference pattern detected by the detector at the first time and a second periodic signal based on the interference pattern detected by the detector at the second time. The phase tracker determines a phase of the first periodic signal and a phase of the second periodic signal. The computer determines a phase difference between the phases of the first and second periodic signals and determines the concentration of the substance in the sample solution based on the phase difference.

In an alternative embodiment, the system may also include a frequency modulator, coupled with the light source, for modulating the frequency of the light beam provided by the light source. In this embodiment, the processor is synchronized with the frequency modulator.

Here, we also explain a type of linear array-to-circular array and 2D array-to-circular array coupling system. The system can encompass the following components:

1) linear to circular optical fiber transformer;
2) 2D to circular optical fiber transformer;
3) circular optical fiber coupling device; and
4) N: 1 optic fiber coupling system.

The linear-to-circular optical fiber transformer is used to transmit optical signals from linear optic fiber module 1301 to circular distributed optical module 1302. Both optic fiber modules are positioned inside chamber 1304. Both end surfaces of the optical fiber transformer are precision polished, and coated with wideband optical anti-reflection layers.

The 2D-to-circular optical transformer is use to transmit optical signals from the 2D optical fiber module 1305 to the equally distributed circular optical module 1306. Both optical fiber modules are positioned inside chamber 1307. Both end surfaces of the optical fiber transformer are precision polished, and coated with wideband optical anti-reflection layers.

The circular optical coupler is composed of two components:

1) In order to achieve the required intermittence rotations of the circular optical fiber module, one can either utilize a closed-loop controlled stepping motor or server motor system, or a mechanical based intermittence rotational device. One solution is to use the gear 1501 and pinion 1505 to achieve the desired intermediate motion. Other types of mechanical intermittence motion control systems may also be implemented.

2) To avoid circular wrapping of the optical fiber 1404 during the rotational motion of the module, a crank-wheel type device can be devised. The device is composed of cylinder 1406, crank 1407, linear bushing 1408, and support frame 1409. Other forms of rotational mechanisms can also be constructed based on similar principles.

In the following section, we provide further detailed descriptions for the operation of the fiber optic biochips with the assistance of Figures 7a, 7b, 8, 9a, 9b, 10a, 10b, 10c, 11, 12a, 12b, 12c and 12d.

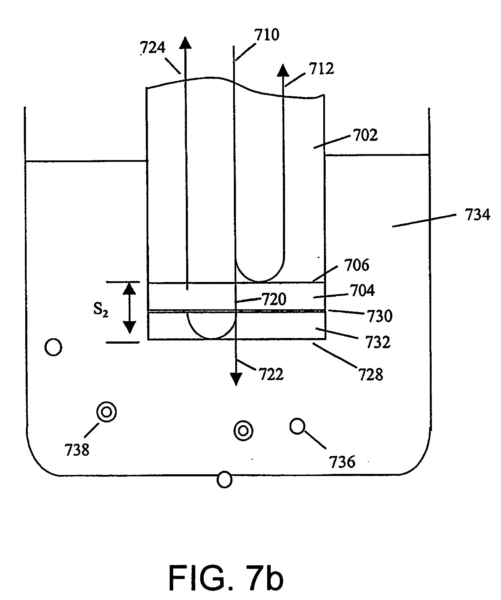

Figures 7a and 7b demonstrate the operation principle of the single-channel optical fiber biosensor. As shown in FIG. 7a, a biosensor probe 700 includes an optical fiber 702 and a reagent 704 which is bonded to a distal tip of the optical fiber 702. The reagent 704 may be an antigen, such as an immunoglobin antigen. The reagent may also be a particular antibody, chemical, DNA segment, enzyme or protein. The reagent 704 may be bonded to the tip of the optical fiber 702 by coating the tip with a solution having a predetermined concentration of the reagent for a predetermined time period until a layer of the reagent 704 is formed on the tip of the optical fiber 702. The resulting structure may then be washed and blocked. Other methods of forming the reagent layer 704 on the tip of the optical fiber 702 will be apparent to those skilled in the art. Such methods may be dictated by the particular reagent being applied.

An incident light beam 710 is sent through the optical fiber 702 toward its distal end. At the interface 706 defined between the optical fiber 702, which has a first index of refraction, and the reagent 704, which has a second index of refraction, a first portion 712 of the incident light beam 710 will be reflected, while a second portion 714 of the incident light beam 710 will continue through the reagent 704. At an interface 708 defined at the exposed surface of the reagent 704, of the second portion 714 of the incident beam 710, a first portion 716 will be reflected, while a second portion 718 will pass into the adjacent medium. Of the first portion 716 of the second portion 714 of the incident beam 710, a first portion 760 will be transmitted back through the optical fiber 702, while a second portion (not shown) will be reflected at the interface 706 back into the reagent layer 704.

As described in more detail below, at a proximal end of the optical fiber 702, the reflected beams 712 and 760 are detected and analyzed. At any given point along the optical fiber 702, including its proximal end, the reflected beams 712 and 760 will exhibit a phase difference. Based on this phase difference, the thickness $S_1$ of the reagent layer 704 can be determined.

As shown in FIG. 7b, the probe 700 is immersed in a sample solution 734 to determine whether any antibodies 736, which are complementary with the reagent antigen 704, are present in the sample solution 734 and to determine the concentration of any such complementary antibodies 736 in the sample solution 734. Since complementary antibodies 736 are characterized by a specific reactivity with the antigen reagent 704, these antibodies 736 will bond to the antigen reagent layer 704, thereby forming an antibody layer 732 over a period of time. The thickness $S_2$ of the layer will be a function of the time of immersion of the probe 700 in the sample fluid 734, as well as the concentration of the antibodies 736 in the sample fluid 734. Other, non-complementary antibodies 738 will not bond with the antigen reagent layer 704. The "overlook" arrangement of the probe 700 with respect to the sample fluid 734 diminishes the likelihood of non-specific bonding. That is, this arrangement diminishes the likelihood of bonding between non-complementary antibodies 738 and the antigen reagent 704.

For a typical example, the molecules of the proteins (i.e., antigens and antibodies) being analyzed will be small relative to the wavelength of the incident light beam 710. Therefore, from an optical perspective, the reagent layer 704 and the antibody layer 732 can be treated as a single layer. That is, the interface 730 between the reagent layer 704 and the antibody layer 732 is usually insignificant, optically speaking. Thus, the combined reagent layer 704 and antibody layer 732 of FIG. 7b will behave similarly, optically speaking, to the reagent layer 704 of FIG. 7a. However, the total thickness $S_2$ of this combined layer will be greater than the thickness $S_1$ of the reagent layer 704 alone. Thus, similar to the probe 700 of FIG. 7a, when an incident beam 710 is directed towards the distal tip of the optical fiber 702, at the interface 706 between the optical fiber 702 and the combined layer, a first portion 712 of the incident beam 710 is reflected, while a second portion 720 of the incident beam 710 continues through the combined layer. At a second interface 728 between the combined layer and the sample solution 734, a first portion 724 of the second portion 720 of the incident beam 710 is reflected, while a second portion 722 of the second portion 720 of the incident beam 710 continues through the sample solution 734. Of the first portion 724 of the second portion 720 of the incident beam 710, a first portion 726 continues back through the optical fiber 702, while a second portion (not shown) is reflected back into the combined layer at the interface 706.

At a proximal end of the optical fiber 702, the reflected beams 712 and 726 are detected and analyzed. At any given point along the optical fiber 702, including its proximal end, the reflected beams 712 and 726 will exhibit a phase difference. Based on this phase difference, the thickness $S_2$ of the combined layer can be determined.

By determining the difference between the thickness $S_2$ of the combined layer and the thickness $S_1$ of the reagent layer 704, the thickness of the antibody layer 732 can be determined. Based on this thickness, the presence of complementary antibodies 736 in the sample solution may be determined. Further, the thickness $S_2$ of the combined layer can be determined (or "sampled") at discrete points in time. In this way, the rate of increase of the difference between the thickness $S_2$ of the combined layer and the thickness $S_1$ of the reagent layer 704 (i.e., the rate of increase in thickness of the antibody layer 732) can be determined. Based on this rate, the concentration of complementary antibodies 736 in the sample solution 734 can be determined within a very short incubation period.

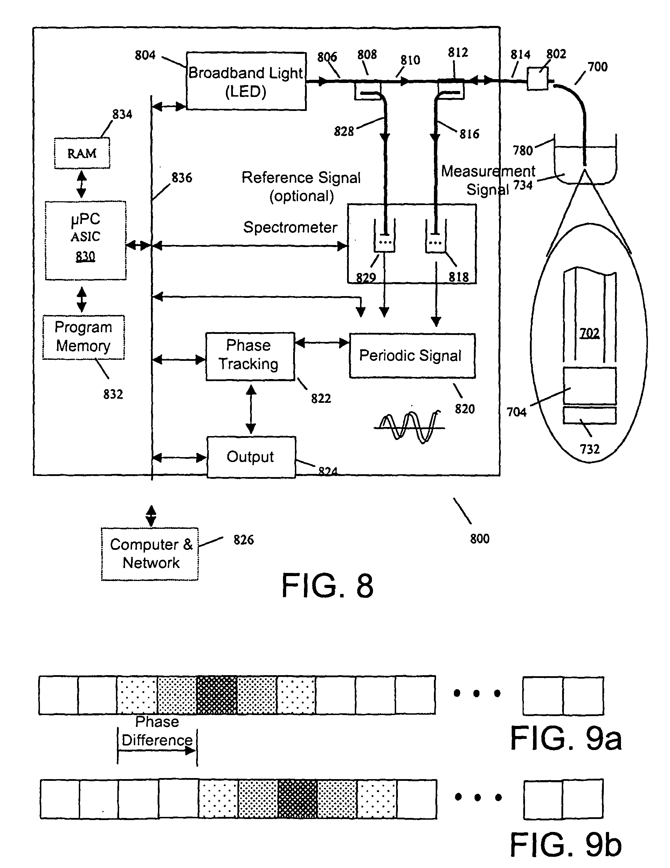

FIG. 8 is a schematic diagram of an optical signal detection system using the above described single channel bioprobe 700. To reiterate, the bioprobe 700, including an optical fiber 702 and reagent 704 bonded to the distal tip of the optical fiber 702, is immersed in a sample solution 734. As shown in the blown up portion, a fiber cladding surrounds a longitudinal surface of the fiber core adjacent to a distal end of the fiber core. More specifically, the fiber cladding surrounds the fiber core from a proximal end tip to a distal end tip. The sample solution is contained within a test tube 780, for example. The bioprobe 700 is optically coupled, via connector 802, with a biosensor optical analyzer 800.

The biosensor optical analyzer 800 includes a light source 804, a spectrometer 818, a periodic signal generator 820, a phase tracker 822 and an output device 824. The biosensor optical analyzer 800 can be operated in a number of ways, for example: (i) via commands from an external computer or computer network 826; (ii) via commands from a dedicated microprocessor 830 which executes instructions from a program storage 832 and includes a RAM 834; or via commands issued from an application specific integrated circuit (or "ASIC") 830.

The light source 804 is a broadband light source, such as a super radiant diode for example. The light source 804 may be a tungsten halogen source. The light source 804 provides a light beam to an optical waveguide 806, such as an optical fiber for example. An optional optical coupler 808 may be used to optically couple the optical waveguide 806 with a further optical waveguide 828 which leads to an optional spectrometer 829. The optional spectrometer 829 preferably includes a one-dimensional (i.e., linear) charge coupled device (or "CCD"), such as a 1X1024 or 1X2048 CCD, and is electrically coupled with a periodic signal generator 820.

The optical coupler 808 also optically couples the optical waveguide 806 with another optical waveguide 810. An optical coupler 812 optically couples the optical waveguide 810 with a further optical waveguide 814. The optical waveguide 814 is optically coupled with the bioprobe 700, via the coupler 802.

The optical coupler 812 also optically couples the optical waveguide 814 with yet another optical waveguide 816. The optical waveguide 816 is optically coupled with a spectrometer 818. Like the optional spectrometer 829, the spectrometer 818 is preferably a one-dimensional CCD, such as a 1X1024 or 1X2048 CCD, and is electrically coupled with the periodic signal generator 820.

Light emitted by the light source 804 is received by the bioprobe 700, via optical waveguide 806, optical coupler 808, optical waveguide 810, optical couple 812, optical waveguide 814, and optical coupler 802. As discussed above with reference to FIG. 7b, two reflected light beams 712 and 726 are sent back through the bioprobe 700. These reflected light beams 712 and 726 are received by the spectrometer 818 via connector 802, optical waveguide 814, optical coupler 812, and optical waveguide 816. As described above, these reflected light beams 712 and 726 are slightly out-of-phase due to the thickness $S_2$ of the combined layer. Thus, in accordance with Fresnel's law, these reflected light beams 712 and 726 form a diffraction pattern on the spectrometer 818. The diffraction pattern shifts as the thickness $S_2$ of the combined layer increases.

As the elements of the CCD in the spectrometer 818 are clocked out, a periodic (e.g., sinusoidal) wave is generated by the periodic signal interpreter/generator 820. The phase of the periodic (e.g., sinusoidal) wave, which is based on the diffraction pattern, is determined by the phase tracker 822. By comparing the phases of sinusoidal waves, which are based on diffraction patterns, sampled at the spectrometer at different times, the rate of increase of the thickness $S_2$ of the combined layer can be determined. This determination can be performed after data acquisition or, in real time during data acquisition.

Referring back to FIG. 7a, before the bioprobe 700 is immersed into the sample solution 734, the reflected beams 712 and 760 also form a diffraction pattern on the spectrometer 818 based on the thickness $S_1$ of the reagent 704. FIG. 9a shows a portion of that diffraction pattern (at a time before immersion of the bioprobe 700) shown on a portion of the one-dimensional CCD of the spectrometer 820. FIG. 9b shows a portion of a diffraction pattern (at a time after immersion of the bioprobe 700) shown on the portion of the one dimensional CCD of the spectrometer 820. As a comparison of FIGS. 9a and 9b shows, the diffraction pattern has shifted. Based on the amount of shift, whether or not antibodies 736, which are complementary with the antigen reagent 704, are present in the sample solution 734 can be determined. By sampling the one-dimensional CCD of the spectrometer at various times after immersion of the bioprobe 700, the rate of change of the shift, and thus, the concentration of any complementary antibodies 736 in the sample solution 734, can be derived.

In FIG. 8, the optical waveguides 806, 810, 814, 816, and 828 are preferably single mode optical fiber, such as communications grade optical fiber for example. Multi-mode optical fiber may be used instead. The optical fiber is preferably at least 3 $\mu$m in diameter, and more preferably between 100 $\mu$m and 600 $\mu$m in diameter.

The light coupler 808 and 812 are preferably "Y" (or two-by-one) optical couplers. Alternatively, two-by-two optical couplers may also be used. If, however, two-by-two optical couplers are used, index matching gel should be applied to open ends to eliminate reflection noise.

The optional spectrometer 829, which is optically coupled with the light source 804, can be used if the frequency spectrum of the laser diode of the light source 804 is unstable. Specifically, the optional spectrometer 829 is used to distinguish drift in the frequency of the light source from a phase shift due to a thickening layer at the distal tip of the bioprobe 700. If, however, the frequency spectrum of the laser diode of the light source 804 is very stable, the optional spectrometer 829, as well as the optical coupler 808 and the optical waveguide 828, can be optional.

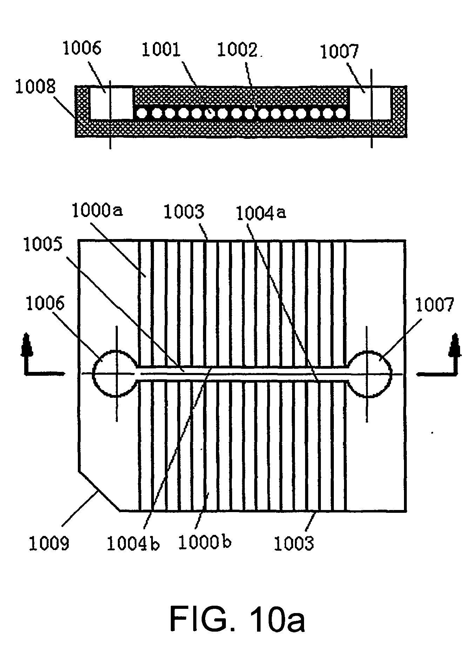

Figure 10a shows the general schematics of a linear optic fiber array based biochip. Optical fiber module 1000 is composed of spaced optical fibers 1001 and a chamber 1002. The two end surfaces 1003 and 1004 of the optical fiber 1001 are coated with different material layers, in order to achieve maximum optical transition efficiency and coherence property. End surface 1004 of the fibers is further specially treated with an activation process, generally a silanization treatment process, in order to increase the immobility of the appropriate reagent bio- or chemical molecules. End surface 1004 is then coated with the required bio or chemical molecule layers. For later reference, this type of treatment is referred to as "B type process." Afterward, the above two linear fiber modules 1000a and 1000b are symmetrically positioned in the chamber of biochip 1008. A distance is maintained between the two symmetrically positioned linear fiber array surfaces 1004a and 1004b, to form a micro fluidic channel 1005. Input port 1006 and output port 1007 are both connected to the micro channel 1005. Chamfer 1009 is used to maintain correct positioning functions of the biochip. Analyte molecules flow into input port, run through micro channel 1005, react with the fiber surfaces 1004, and then flow out via exit port 1007. To provide driving power for the fluid motion, the micro fluidic pump is connected to exit port 1007. The pump uses either negative pressure to extract the fluid out or use positive pressure to press the reagent back to the reaction chamber.

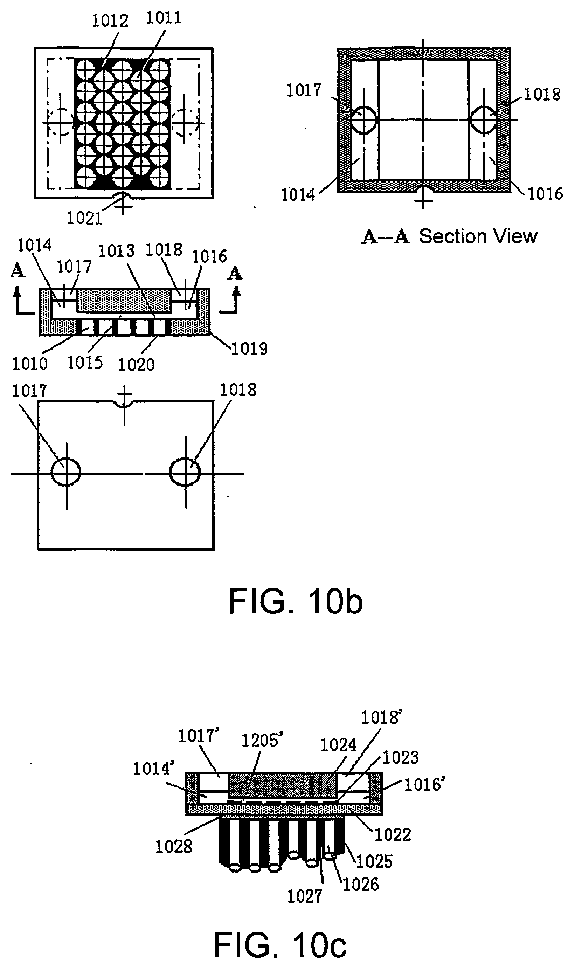

Figure 10b shows the general schematics of a 2D optic fiber array based biochip. Optical fibers 1011 are packed into chamber 1012 to form optical fiber module 1010. Optical fiber module 1010 is perpendicular mosaicked into the lower portion of the biochip 1019. The two end surfaces 1013 and 1020 of optical fiber module 1010 are coated with different material layers, in order to achieve maximum optical transition efficiency and coherence property. End surface 1013 of the fiber module is further specially treated with an activation process, generally a silanization treatment process, in order to increase the immobility of related reagent bio or chemical molecules. This type of treatment is called "A type process." This A-type process can be extended with an additional procedure --- further coating the end surface with the required reagent layer of bio or chemical molecules. The extended treatment is referred to as "B-type process." A horizontal micro fluidic channel 1015 is constructed in front optical fibers' surface 1013. The two sides of the micro fluidic channel are connected with an input distribution channel 1014 and an output collection channel 1016. An input port 1017 and an output port 1018 are built on top of the distribution channel 1014 and the collection channel 1016, respectively. Micro groove 1021 is used to maintain correct positioning of the biochip. Sample solutions flow into the input port 1017, pass by distribution channel 1014 to reach horizontal micro channels 1015, react with all fiber surfaces 1013, then flow out through collection channel 1016 and vertical exit port 1018. In order to drive the fluid motion, a micro fluidic pump is connected to exit port 1018. The micro fluidic pump can use either negative pressure to extract the fluids out or use positive pressure to press the reagents back to the reaction chamber.

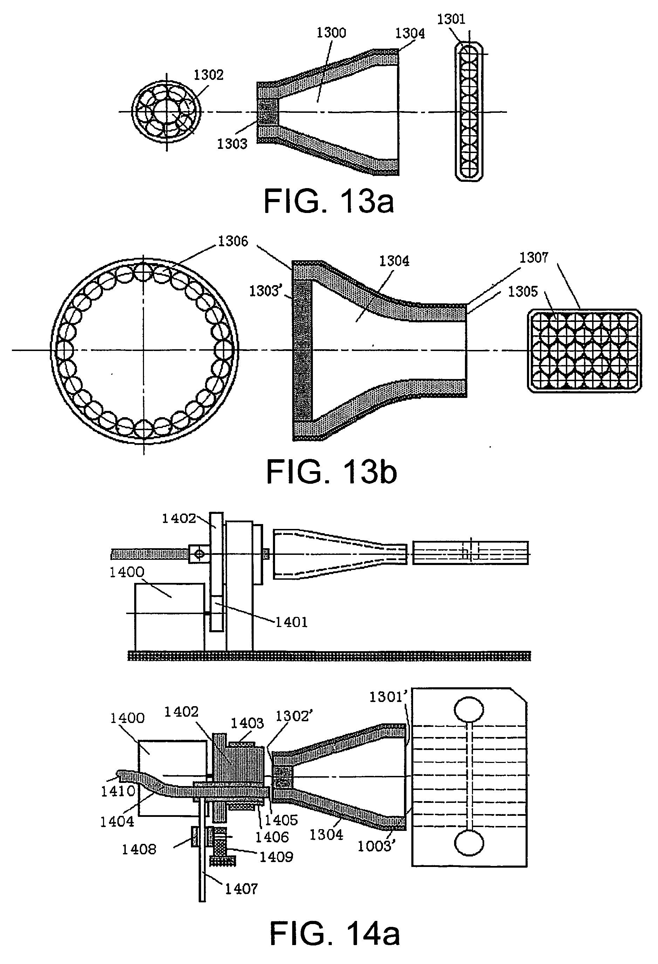

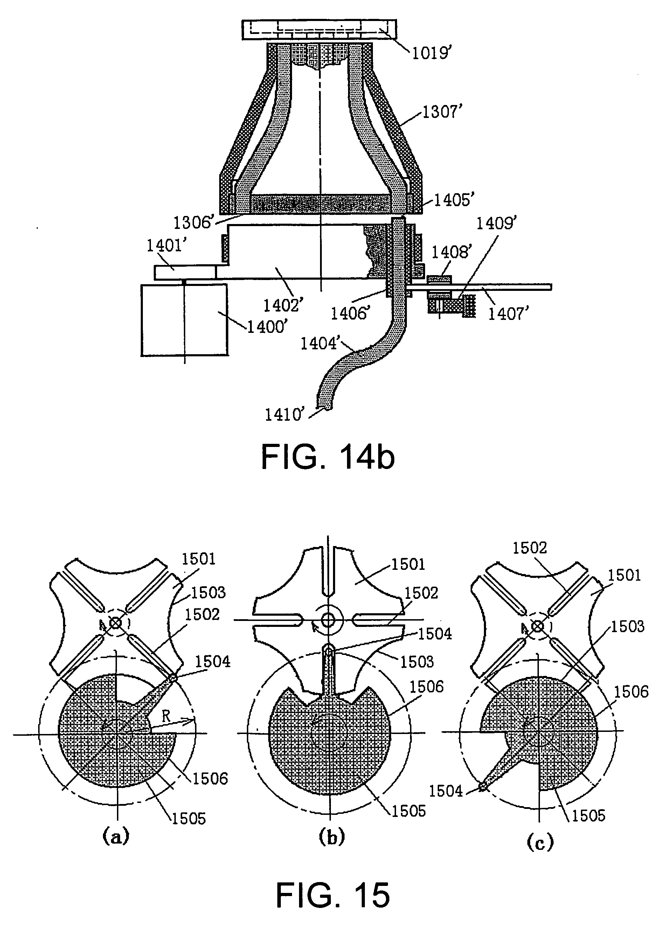

Figure 10c depicts the structure of a hybrid biochip composed of a 2D optic fiber array and a glass base plate. "B type process" is applied onto top surface of glass plate 1022, and the 2D grid distributions of bio or chemical layers 1023 are formed. The bottom surface of glass base plate 1022 is connected to the optical fiber module 1025, and optical index matching fluid 1028 is injected between the fiber module and the glass plate. Micro fluidic channel 1024 is pressed against the top surface of the glass base plate, thus forming the structure similar to that in figure 10b. Sample fluids flow into input port 1017, run through glass plate surface, and thus react with the immobilized bio or optical grid 1023. The optical signal of the reaction process is transmitted through glass plate 1022, and coupled into optic fiber module 1025. All optical fibers 1026 of the module 1025 are positional aligned one to one with the bio or chemical 2D grid pattern 1023, thus the optical signal is transmitted to the detector. The above optical fiber module 1025 can utilize either a linear-to-circular transformer as shown in figure 13a, or the 2D-to-circular transformer as shown in figure 13b.

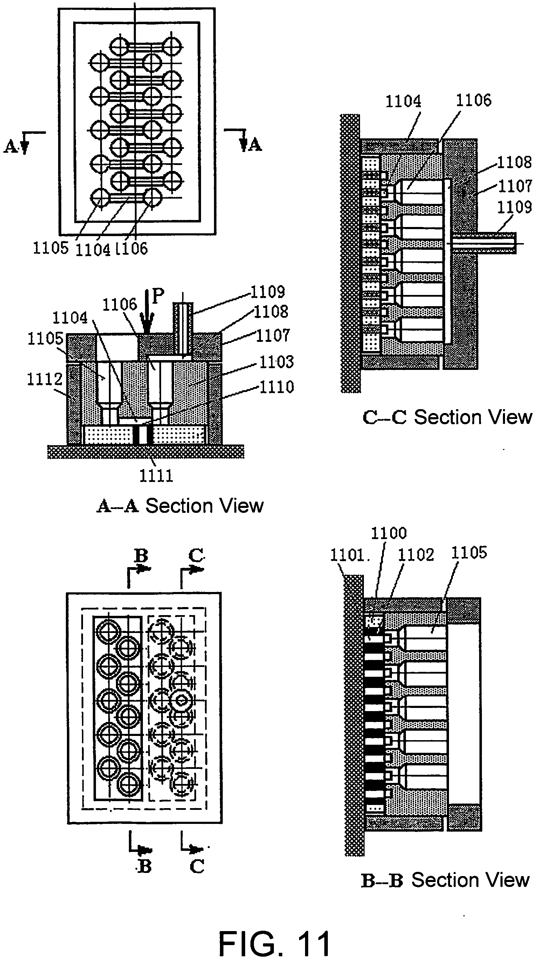

Figure 11 shows a modular device composed of multiple micro fluidic channels and linear optic fiber biochips. Optical fibers 1101 are distributed in capsule 1102 to form optical fiber module 1100. Two end surfaces 1110 and 1111 of the optical fibers are treated with the "A type process." The multiple channel micro fluidic chamber 1103 is pressed on top of the fiber module 1100. Micro fluidic channel 1104 is formed between the fiber end surface 1110 and the multi channel micro cuvette 1103. Different sample solutions are injected into the input ports 1105. The samples then enter into the micro channel 1104, pass through the corresponding optical fiber surfaces 1110. The molecules of the corresponding reagents then immobilize onto the optic fiber surfaces 1110. Finally the reagent liquid flows out through the exit ports 1106. Compression plate 1107 is pressed on the multi channel micro fluidic cuvette 1103 and the optic fiber module 1100. A cavity 1108 is devised under compression plate 1107, and this cavity 1108 is above all exit ports 1106. A extraction tube 1109 is positioned on top of cavity 1108, and is connected to a controllable micro fluidic pump. During operation, cavity 1108 experiences either negative or positive pressures, thus drives the reagent liquid into single route or back and forth motions in micro cuvette 1104. By lifting the cover plate 1107 and micro cuvette 1103, the operator can easily pick up the immobilized fiber module 1100. This type of optic fiber module can be used for single analyte-multi perimeter tests.

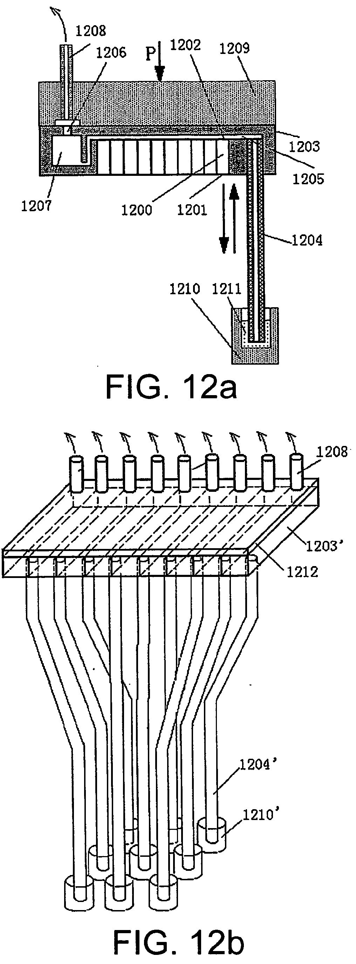

Figure 12a demonstrates a sipper type linear array optic fiber biochip after undergoing a "B type process." The optic fiber module 1200 is mosaicked into chip 1203, and the cover block 1209 is pressed on chip 1203. The air extraction tube 1208 is packed into cover block 1209, with the position of the tube aligned with the exit pupil 1206. The air extraction tube 1208 can be connected into a controllable micro fluidic pump. Extraction sipper 1204 is immerged into sample solution 1211 in sample well 1210. When micro chip 1203 is under negative pressure sample solution 1211 is sucked into micro cuvette 1205, and finally flows to waste chamber 1207. In this process all optical fiber surfaces 1202 react with the same sample solution, thus achieved the single sample, multi parameter tests. Each optical fiber surface 1201 is coupled with the corresponding optical fiber array transformer.

Figure 12b demonstrates a modular sipper type linear array optical fiber micro-fluidic biochips. A 2D modular biochip array is formed by parallel positioning of several sipper type linear biochips 1203 against a compression block 1212. Extraction tube 1204 are distributed accordingly with sample well 1210, either one dimensionally or 2 dimensionally. When all extraction tubes 1204 are immerged into the sample well 1210, tests of multiple samples and multiple parameters can be performed.

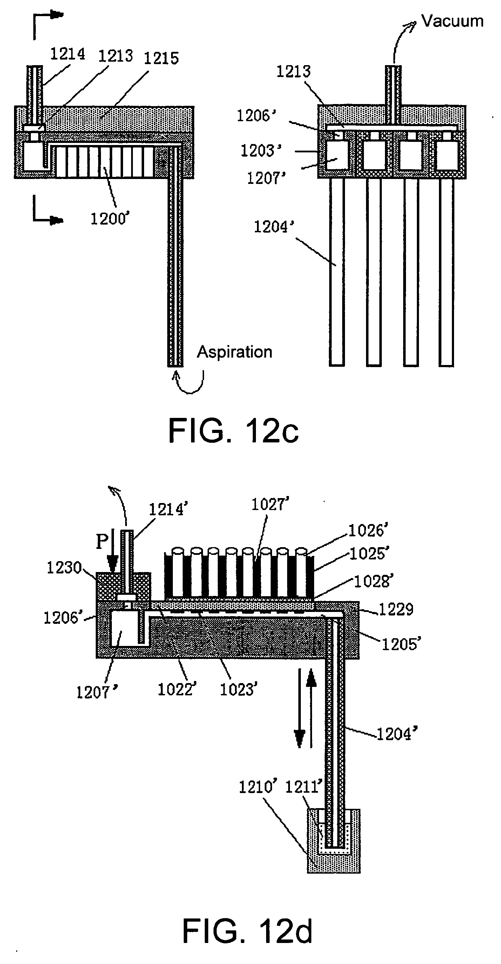

Figure 12c depicts an air extraction device of the modular sipper linear optical fiber micro-fluidic biochips. Cover block 1215 is pressed on the module formed by biochips 1203. The concave chamber is positioned under the cover block 1215, and is aligned with the biochips' exit pupils 1206. The extraction tube 1214 is placed on top of the concave chamber. The extraction tube is further connected to a controllable micro fluidic pump. This micro fluidic pump uniformly controls all air flows to and from all the micro chips. When there is a large quantity of micro chips, this unified air flow control device can significantly simplify the operation.

Figure 12d demonstrates a hybrid sipper type biochip composed of a linear fiber array and a glass base plate. The top surface of the glass plate 1022 is treated with a "B type process," and thus deposited with a grid distribution of bio or chemical layer 1023. The glass plate 1022 is mosaicked into chip 1229. The optic fiber module 1027 is placed on the back of the glass plate, and optical index matching liquid 1028 is injected into the space between them. Optical fiber array 1026 is aligned one by one with the interference molecule grid layer 1023. The cover block 1230 is pressed on top of the exit pupil 1206. During air extraction, sample solutions flow through the bio or chemical layer 1023, and reacts with them. Optical signal is transmitted through the optical fiber array 1026 of the optical fiber module 1025, and then transmitted to the detector.

In summary, the optical fiber micro-fluidic biochips disclosed in this patent are based on the shifting property of white light reflected spectral interference patterns. The biochips encompass numerous merits including, simple structure, small size, low cost, high sensitivity, large linear range, not using unstable or toxic indicators, and the use of only small quantity of samples. The biochips can be implemented into various detail structural formats. The system is effective of detecting multiple properties of a single sample (analyte) and/or multiple properties of multiple samples (analytes), during a single operation.

**Claims**

1.    A type of optical fiber micro-fluidic biochip array that is based on the shifting properties of white light reflected spectral interference patterns, the fiber optical biochip array includes for example: linear optical fiber bio-chips; 2D optical fiber bio-chips; and hybrid biochips composed of 2D optical fibers and glass base plates;

The characteristics of the optical fiber micro-fluidic biochip arrays are:

Linear array biochips are based on one or more linear optical fiber modules 1000 that is enclosed in chip 1008; the linear fiber module 1000 is built on linear fiber optical array 1001 that is encapsulated in enclosure 1002;

2D array optical fiber chips are based on a 2D fiber module 1010 that is enclosed in biochip 1019; the 2D fiber module is composed of the 2D optical fiber array 1011 encapsulated in enclosure 1012;

Hybrid 2D optical fiber-glass base plate biochip utilizes the surface of the glass base plate 1022 to immobilize the bio region layer 1013, and consists of a 2D distributed sensing array; Glass base plate 1022 and micro fluidic cuvette 1024 are physically integrated together; Optical fiber module 1025 and optical fiber transformers 1300 and 1304 are placed behind the glass base plate 1022; Optical index matching liquid 1028 is injected into the gap between module 1025 and transformer 1300 (1304); Optical fibers 1026, 1301 or 1305 of module 1025 and of transformer 1300 (1304) are positional aligned one to one with the bio or chemical layer array 1023.

2.    The optical fiber micro-fluidic biochip array of claim 1 further includes the following three basic forms, by integrating the optical fiber biochip with the micro fluidic structures:

1) Linear array based optical fiber biochips:

Optical fiber 1001 is in encapsulated in enclosure 1002 to form optical fiber module 1000; Two optical fiber modules 1000a and 1000b are laid to form a micro fluidic cuvette 1005; The two sides of micro cuvette 1005 are connected with an input port 1006 and an exit port 1007; Exit port 1007 is further connected to a micro fluidic pump;

2) 2D array based optical fiber bio chips:

Optical fiber 1011 is encapsulated into enclosure 1012 to form fiber module 1010; Optical fiber 1011 can be arranged into either linear patterns or 2D patterns; Fiber module 1010 is mosaicked perpendicularly onto bottom part of biochip 1019; A horizontal micro fluidic channel 1015 is devised in front of optical fiber tip surface 1013; The two ends of the micro fluidic channel are further connected with fluid distribution channels 1014 and 1016; An input port 1017 and exit port 1018 are built on the top of distribution channel 1014 and 1016, and exit port 1018 can be connected to a micro fluidic pump;

3) Hybrid 2D optical fiber array-glass plate biochips:

2D array distributed bio- or chemical layers 1023 are built on glass base plate 1022; The surface with the bio or chemical layers of the glass base plate 1022 is pressed into micro fluidic cuvette 1024; The other surface of the glass base plate 1022 is connected to optical fiber module 1025; In the middle gap between the glass base plate and the optical fiber array, it is injected with optical index matching liquid;

The above mentioned three combination forms of optical fiber biochips and micro fluidic cuvettes can be further extended to other formats.

3. The optical fiber micro-fluidic biochip array of claim 2 further includes the following variations:

1) Biochips modules composed of multi channel fluidic cuvettes and linear array optical fibers:

Optical fibers 1101 are equal space embedded in enclosure 1102 to form the optic fiber module 1101; Multi channel micro fluidic cuvette 1103 is placed on top of the optic fiber module 1101; The two sides of the micro fluidic cuvette are connected to the input port 1105 and exit port 1106; Compression plate 1007 presses micro fluidic cuvette 1103 down to the micro chip 1100; An air cavity 1108 is constructed under compression plate 1107, where this air cavity is placed above all exit ports 1106; An air extraction tube is placed on top of the cavity 1108; and this extraction tube is connected to a micro fluidic pump;

2) Sipper type linear optical fiber bio chips:

Linear array based fiber optic module 1200 is encapsulated inside biochip 1203; The end surface 1202 of the optical fiber, which has been immobilized with bio or chemical layers, is placed toward the micro fluidic cuvette 1205; One end of the micro fluidic cuvette is connected to the fluid waste chamber 1207, and further linked to exit port 1206; Another end of the micro fluidic cuvette is connected to air extraction tube 1204; Air extraction tubes 1204 are distributed accordingly with the structure of the reagent well 1210, either linearly or two dimensionally; Compression block 1209 is pressed onto biochip 1203; Air extraction tube 1208 is mosaicked into compression block 1209, and is connected to a micro fluidic pump;

3) Sipper type linear optical fiber biochip modules:

A 2D micro chip array can be formed by parallel combining several sipper type linear biochips 1203 with a cover block 1212; Air extraction tube 1214 is distributed accordingly with reagent cuvette 1210, either linearly or two dimensionally; Additionally, an air chamber 1213 can be placed under the compression block 1215; The air tube 1214 is placed on top of the central portion of the air chamber, and the air chamber can be connected to a micro fluidic pump;

4) Hybrid sipper type biochips composed of a linear optical fiber array and a glass base plate:

2D grid patterns of bio- or chemical layers 1023 are built on top of a glass base plate 1022; Glass plate 1022 is mosaicked into biochip 1229; Optical fiber module 1027 is placed at the back of the glass base plate 1022; In the middle between module 1027 and glass plate 1022, it is injected with optical index matching liquid 1028; The cover block 1230 is pressed onto the top of exit tube 1206; The air extraction tube 1214 is connected on top of the cover block 1230, and can be connected to a micro fluidic pump; Similar to the above spiral type optic fiber biochips, combined modules can be formed by parallel integration of several linear optical fiber-glass plate based spiral type biochips 1229; The air extraction tubes 1204 are distributed accordingly with the reagent well 1210;

5) Hybrid sipper type biochip modules composed of linear optic fiber arrays and glass base plates:

A hybrid sipper type biochip module can be formed by integrating several linear optical fiber array-glass base plate sipper type biochips 1229 into one structure; Air extraction tube 1204 is distributed accordingly with the reagent well 1210, either linearly or two dimensionally.

4. The optical fiber micro-fluidic biochip array of claims 1 and 2, where the end surface of the optic fiber modules 1000, 1010 and 1025 are further coated with broad brand anti reflection layers, the end surface of the optic fibers are further treated with an activation process (generally a silanizing treatment process), the end surface of the optic fiber module is finally immobilized with required bio or chemical molecular layers when needed.

5. The optical fiber micro-fluidic biochip array of claim 3, where the end surface of the optic fiber modules 1100 and 1200 are further coated with broad brand anti reflection layers, the end surface of the optic fibers are further treated with an activation process (generally a silanizing treatment process), the end surface of the optic fiber module is finally immobilized with required bio or chemical molecular layers when needed.

FIG. 1a

FIG. 1b

FIG. 1c

FIG. 1d

14

Incident Light 206 202 Reflected Light

θ

204

x

z

y

208

# FIG. 2a

1

Normalised
Intensity

0

60 70 θ 80

Incident Angle (degree)

# FIG. 2b

212

78.5 ~ 90°

210

214

216

## FIG. 2c

214

224

Coupler

Beam Dump

Spectrometer

238

234

222

236

228

230

Mode Scrambler

226

210/212

212

214

210

218

216

## FIG. 2d

FIG. 3

FIG. 4

FIG. 5

FIG. 6

FIG. 7a

**FIG. 7b**

FIG. 8

FIG. 9a

FIG. 9b

1006   1001   1002.   1007

1008

1000a   1003   1004a

1005

1006   1007

1009   1004b   1000b   1003

# FIG. 10a

**FIG. 10b**

**FIG. 10c**

A–A Section View

C–C Section View

B–B Section View

FIG. 11

FIG. 12a

FIG. 12b

## FIG. 12c

## FIG. 12d

FIG. 13a

FIG. 13b

FIG. 14a

FIG. 14b

FIG. 15

# INTERNATIONAL SEARCH REPORT

| | International application No. |
|---|---|
| | PCT/CN2004/000390 |

| A. CLASSIFICATION OF SUBJECT MATTER |
|---|
| IPC7: G01N21/45,G01N33/543 |
| According to International Patent Classification (IPC) or to both national classification and IPC |

| B. FIELDS SEARCHED |
|---|
| Minimum documentation searched (classification system followed by classification symbols) |
| IPC7 : G01N21, G01N33, G01N35, G02B9 |

| Documentation searched other than minimum documentation to the extent that such documents are included in the fields searched |
|---|
| |

| Electronic data base consulted during the international search (name of data base and, where practicable, search terms used) |
|---|
| CNPAT,WPI,EPODOC,PAJ: biosensor (biological sensor), biochip, optical fibre (fibre optic), reflective (reflectrometric), interference |

## C. DOCUMENTS CONSIDERED TO BE RELEVANT

| Category* | Citation of document, with indication, where appropriate, of the relevant passages | Relevant to claim No. |
|---|---|---|
| Y | Sun Yan, et al., "Optical immunosensors technology and application", Sensor Technology 2002, no.7, page 5-8, see page 7, Part 3.6. | 1-5 |
| Y | US5837196A (Pinkel et al.) 17.Nov 1998 (17.11.1998) see column 4,line8-column 22, line 44, and figure 1-7B | 1-5 |
| Y | US20010055118A (Nawracala et al.) 27.Dec 2001 (27.12.2001) see page 2,Part 0033-page 3, Part 0039, and figure 1-2 | 1-5 |
| P.Y | Yang Yuxiao, et al., " Study of optical fiber biosensor based on white-light interferometry", Journal of Xi'an Jiaotong University, Sep. 2003, vol.37, no.9, see the whole document. | 1-5 |
| A | US5854863A (Erb et al.) 29.Dec 1998 (29.12.1998), see the whole document. | 1-5 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20. Jun 2004(20.7.2004) | 0 2 · AUG 2004 (0.2—·—0.8 · 2 0 0 4) |
| Name and mailing address of the ISA/ | Authorized officer |
| | Lihua Wang |
| Facsimile No. | Telephone No. 01062085765 |

## INTERNATIONAL SEARCH REPORT
Information on patent family members

International application No.
PCT/CN2004/000390

| Patent document Cited in search report | Publication date | Patent family members | Publication date |
|---|---|---|---|
| US5837196A | 17.Nov 1998 | WO9727326A | 31.Jul 1997 |
| | | EP0879299A | 25.Nov1998 |
| | | JP2000505281T | 9.May 2000 |
| US200105518A1 | 27. Dec 2001 | US6580510B2 | 17.Jun 2003 |
| | | DE19958136A1 | 13.Jun 2001 |
| US5854863A | 29.Dec 1998 | US5952035A | 14.Sep 1999 |

Form PCT/ISA /210 (patent family annex) (July 1998)